# EUROPEAN PATENT APPLICATION

(11) **EP 4 356 752 A1**
(43) Date of publication of application: **24.04.2024**
(21) Application number: 22202195.8
(22) Date of filing: 18.10.2022
(51) Int. Cl.: A23L 2/02, A23L 2/40, A23L 2/52, A23L 33/15, A23L 33/155, A23L 33/16, A23L 33/17

(54) **ORAL COMPOSITION, A PROCESS FOR ITS MANUFACTURE AND ITS USE AGAINST SKIN AGING**

(71) Applicant: Dopes Erlebnisreisen GmbH, 4422 Arisdorf (CH)
(72) Inventor: Schäfer, Prof. Dr. Rolf, 4422 Arisdorf (CH); Blümel, Lisa, 18057 Rostock (DE)
(74) Representative: Braunpat AG

(57) **Abstract**

The present invention is directed to an oral composition comprising processed fruit, whereby the fruit is chosen from mango, mangosteen, button mangosteen and charichuelo, and at least one ingredient from the group of a selenium source, retinol and its alkyl esters, alpha-tocopherol and its alkyl esters, and coenzyme Q10, whereby the selenium source is at least one ingredient from the group of L-selenomethionine, L-selenocysteine and sodium selenite. The invention is further directed to the manufacture of such oral composition and its use, as well as to non-therapeutic methods of maintaining and/or improving the condition and appearance of skin by consuming such composition, preferably as beverage.

## Description

### Field of the invention

The present invention relates to an oral composition, in particular in the form of beverages and effervescent tablets, containing an optimal combination of nutritional ingredients at optimal ratios in order to maintain and/or improve the condition and appearance of human skin, preferably for reversing, reducing or slowing down one or more signs of skin photo damage, photo aging and normal aging of the skin of a human to which said oral composition is orally administered to.

There is a multitude of different intrinsic and external factors that influence skin condition and foster skin aging. Intrinsic factors are genetic predisposition, the normal aging process, or hormonal status. UV radiation, air pollution, smoking and/or allergenic compounds are external factors which can account for premature skin aging.

As the skin ages chronically, it particularly loses elasticityand forms wrinkles. Chronic exposure to UV radiation (UVB and UVA) leads to premature skin aging through epidermal and dermal damage by oxidative stress and sunburn. Sunburn is the inflammatory reaction of the skin in response to excessive exposure to natural or artificial solar light of the UVB wavelength.

In addition to other influencing factors also nutrition has a strong impact on the skin's condition. The inventors of the present invention now found an oral composition that has a very positive impact on the human skin, measured on the facial part of the skin or on the décolleté.

### Background of the invention

Different beverages activating cellular genes have been disclosed: R. Schäfer for example describes in EP-A 3 403 512 a fitness drink containing I-carnitine, ubiquinone and mango enriched in selenium; Da Silva et al. describe in US 2014/0057021 a drink inducing stimulating properties with taurine, caffeine and inosit, Latzke describes in DE-A 199 37 079 a drink containing at least 1g/l of a guarana extract and at least 25 g/l of sucrose. US 2008/0193604 describes neutraceuticals such as ginseng, glutamine and phenylalanine and natural caffeine. WO 2006/065255 describes a beverage with vitamin B, vitamin C, taurine and extracts of gingko baloba and guarana.

Several publications such as US 8,642,097; US 6,403,116; US 6,048,566, DE-A 10 2005 049 664 and DE-U 20 2013 010 613 relate to beverages containing ubiquinone, also referred to as vitamin Q10. Vitamin Q10 is the key coenzyme converting oxygen into ATP (adenosine triphosphate), the organic energy form of all cellular metabolisms. It neutralises also free radicals.

L-selenomethionine and L-selenocysteine, as well as sodium selenite are nutritional essentials for DNA (desoxyribonucleic acid) synthesis and reduction of oxidative damage of telomers, the protective end caps of the chromosomes. Telomers are shortened during lifetime at each cellular division and ongoing oxidation. At a significantly reduced length of telomers the cells stop to divide and die, which is called apoptosis. This means the lengths of our telomers determine our biological age. Protection of telomer damage with antioxidants such as selenium thus expands our lifetime, i.e., turns back the age clock (Q. Xu et al., The American Journal of Clinical Nutrition, 2009, 89 (6), p. 1857-1863: "Multivitamin use and telomere length in women", https://doi.org/10.3945/ajcn.2008.26986).

Alpha-tocopherol (Vitamin E) is important in the protection of free radicals, increasing wound healing and general problems with aging.

Retinol (Vitamin A) is responsible for cell regeneration and growth. It boosts the immune system and the bone cellular growth including increased synthesis of elastin, collagen and hyaluronic acid sodium salt. It is a key component for the formation of fresh muscle tissue incl. heart muscle.

### Summary of the invention

The present invention is directed to an oral composition comprising processed fruit, whereby the fruit is chosen from mango, mangosteen, button mangosteen and charichuelo, and at least one ingredient from the group of a selenium source, retinol and its alkyl esters, alpha-tocopherol and its alkyl esters, and coenzyme Q10, whereby the selenium source is at least one ingredient from the group of L-selenomethionine, L-selenocysteine and sodium selenite. The invention is further directed to the manufacture of such oral composition and its use, as well as to non-therapeutic methods of maintaining and/or improving the condition and appearance of skin by consuming such composition, preferably as beverage.

### Detailed description of the invention

The single ingredients of the oral composition and their amounts are described in more detail below. The oral composition may be added to a beverage, whereby the beverage can also be water, or used in a dried form as e.g. in form of a powder or an effervescent tablet.

For manufacturing the dried forms, the mixture of the ingredients can e.g. be dried and then added to the standard ingredients of powders or effervescent tablets as known to the person skilled in the art. Alternative manufacturing methods as known to the person skilled in the art are also possible.

The oral composition may also be added to food, especially dairy products such as yoghurts or their vegan alternatives such as e.g. soy yoghurt, almond yoghurt, coconut yoghurt, rice yoghurt, oat yoghurt etc.

Preferably the processed fruit is processed mango fruit and/or processed mangosteen fruit. The term "processed mango fruit" and "processed mangosteen fruit", respectively, encompasses any product being made from the mango fruit and mangosteen fruit, respectively, preferably by physical treatment, whereby chemical treatment is not excluded. Thus, the term "processed mango fruit" and "processed mangosteen fruit", respectively, encompasses e.g. fruit pulp, fruit juice, fruit juice concentrate, fruit concentrate, fruit puree and fruit extract. The same applies for the terms "processed button mangosteen fruit" and the "processed charichuelo fruit".

A non-limiting example of a mango fruit pulp is e.g. one that contains water in an amount ranging from 80 to 85 weight-%, whereby its protein content is in an amount ranging from 0.1 to 1 weight-%, its carbohydrate content is in an amount ranging from 10 to 15.7495 weight-%, its fiber content is in an amount ranging from 0.5 to 2.5 weight-%; its mineral content is in an amount ranging from 0.15 to 0.25 weight-%, whereby the minerals are e.g. calcium, magnesium, potassium, zinc, iron II, phosphor and sodium; its vitamin content is in a total amount ranging from 0.000001 to 0.0005 weight-%, whereby the vitamins are e.g. vitamin C, B₆, A, E, K, thiamin, niacin and folic acid, and its content of saturated and unsaturated fatty acids is in a total amount ranging from 0.05 to 0.5 weight-%, all amounts based on the weight of the mango fruit pulp.

The mango fruit pulp is e.g. produced by pulping the mango fruit and heating the pulp to 95°C for 10 to 30 seconds to destroy organisms that may spoil the product (e.g. yeast, mould, enzymes). Mangosteen fruit pulp is manufactured accordingly.

The fruit pulp is preferably supplemented with 1 to 3 weight-% (preferably 2 weight-%) of a natural preservative and 0.1 to 0.2 weight-% (preferably 0.15 weight-%) of a stabilizing antioxidant, all amounts based on the weight of the fruit pulp. Preferably, the preservative is sodium citrate and/or citric acid, and/or the antioxidant is ascorbic acid. Optionally, a food dye (preferably 0.05 to 0.2 weight-%, more preferably 0.1 weight-%, based on the weight of the fruit pulp, of e.g. beta-carotene) and/or a mango aroma (0.2 to 0.4 weight-%, preferably 0.3 weight-%, based on the weight of the fruit pulp) are added to the fruit pulp.

The processed mango fruit and/or the processed mangosteen fruit are preferably used in a daily amount ranging from 5 g to 40 g, more preferably in a daily amount ranging from 5 g to 20 g, most preferably in a daily amount ranging from 12.5 g +/- 2 g.

The selenium source, i.e. L-selenomethionine, L-selenocysteine and/or sodium selenite, are preferably used in a total daily amount ranging from 35 to 125 µg, more preferably in a total daily amount ranging from 35 to 75 µg, even more preferably in a total daily amount ranging from 35 to 55 µg, most preferably in a total daily amount ranging from 50 to 55 µg.

Retinol and/or its alkyl esters, preferably retinol and its C₁₋₂₀ alkyl esters, more preferably retinyl palmitate and/or retinyl acetate, most preferably retinyl palmitate, are preferably used in a daily amount ranging from 1.7 to 7.6 µmol, more preferably in a daily amount ranging from 1.9 to 5.7 µmol, most preferably in a daily amount ranging from 3.8 to 5.7 µmol, most preferably the daily amount is 2.8 to 2.9 µmol.

Alpha-tocopherol (Vitamin E) and/or its C₁₋₁₂ alkyl esters, preferably alpha-tocopherol, is preferably used in a daily amount ranging from 23 to 163 µmol, more preferably in a daily amount ranging from 34.8 to 116 µmol, even more preferably in a daily amount ranging from 58 to 81 µmol, more preferably in a daily amount around 70 µmol.

Coenzyme Q10 ("CoQ10") exists in three redox states: fully oxidized (ubiquinone = 6-decaprenyl-2,3-dimethoxy-5-methyl-1,4-benzoquinone), partially reduced (semiquinone or ubisemiquinone), and fully reduced (ubiquinol). Therefore, the term CoQ10 encompasses any of its combinations as well as the single ones. CoQ10 is preferably used in a daily amount ranging from 10 to 100 mg, preferably in a daily amount ranging from 12.5 to 50 mg, more preferably in a daily amount ranging from 20 mg to 35 mg, most preferably in a daily amount around 30 mg. Any combination of any preference of the ingredients and/or their amounts as described above are within the scope of the present invention.

The selenium source, retinol and its alkyl esters, alpha-tocopherol and its alkyl esters, and coenzyme Q10 may be produced by chemical or biotechnical synthesis or isolated from natural sources. Thus, "isolated" in this context means separated from other components of (a) a natural source, such as a plant or animal cell or cell culture, or (b) a synthetic organic chemical reaction mixture. Thus, the compounds such as retinyl palmitate, tocopherol, seleno-L-methionine and ubiquinon may have either been separated from other biological molecules (e.g. when they are produced in cell culture) or from organic chemicals (e.g. when they are produced by organic synthesis). An "isolated" compound recited in the present disclosure is preferably "purified". As used herein, "purified" means that when isolated, the isolate contains at least 95%, or preferably at least 98%, of a compound by weight of the isolate.

### Preferred embodiments of the invention

In a preferred embodiment of the present invention, the oral composition further comprises at least a coenzyme, preferably selected from panthenol (provitamin B₅), biotin (vitamin B₇), riboflavin (vitamin B₂), nicotinamide adenine dinucleotide (NAD), cobalamin (vitamin B₁₂), niacin (vitamin B₃), folic acid (vitamin B₉) and pyridoxine (vitamin B₆).

The oral composition comprises these ingredients preferably in the following preferred and more preferred daily amounts:

| **Ingredient** | **Preferred daily amount** | **More preferred daily amount** |
|---|---|---|
| Panthenol | 5-15 mg | 10 mg |
| Biotin | 0.5-1.5 mg | 1 mg |
| Riboflavin | 1.0-3.0 mg | 2 mg |
| NAD | 20-40 mg | 30 mg |
| Cobalamin | 1-10 µg | 5 µg |
| Niacin | 13-16 mg | 15 mg |
| Folic acid | 100-200 µg | 160 µg |
| Pyridoxine | 1-3 mg | 2 mg |

In another preferred embodiment of the present invention, the oral composition additionally comprises at least an amino acid, preferably selected from the group of histidine, leucine, isoleucine, valine, lysine, methionine, phenylalanine, threonine and cysteine, whereby their L enantiomers are preferred. Any one or more of histidine, isoleucine, valine, lysine, methionine, phenylalanine, threonine and cysteine are used in a daily amount ranging from 200 to 400 mg, preferably in a daily amount of 300 mg; leucine is used in a daily amount ranging from 1200 to 1600 mg, preferably in a daily amount of 1400 mg.

In a further preferred embodiment of the present invention, the oral composition comprises a coenzyme, preferably with the preferences as defined above, and an amino acid, preferably with the preferences as defined above.

Preferably the oral composition is part of a beverage, preferably of a non-alcoholic beverage.

In a preferred embodiment of the present invention the term «beverages» encompasses carbonated beverages, such as, for example, flavoured seltzer waters, soft drinks or mineral drinks, as well as carbonated and non-carbonated fruit juices, fruit drinks, fruit punches and concentrated forms of these beverages. The term "beverages" encompasses sport drinks, energy drinks, vitamin drinks, as well as milk shakes or plant alternative drinks from soja, rice, oat, almond and other plant or nut moieties. Shots are also included.

By way of example, the fruit juices and fruit drinks used herein include grape, pear, passion fruit, pineapple, banana or banana puree, apricot, peach, orange, lemon, grapefruit, apple, cranberry, tomato, mango, mangosteen, papaya, lime, tangerine, cherry, raspberry, carrot and mixtures thereof, preferably papaya, pineapple, mango, mangosteen, cherry, peach, pear, apple and apricot.

Fruit juice beverages also include extended juice products which are referred to as "nectars". These extended juice products typically comprise from about 50% to about 90% fruit juice, preferably, from about 50% to about 70% fruit juice, based on the total weight. Nectars usually have added sugars or artificial sweeteners or carbohydrate substitutes. Suitable sweeteners include sucralose, saccharin, cyclamates, acetosulfam, L-aspartyl-L-phenylalanine lower alkyl ester sweeteners (e.g. aspartame).

As used herein, the term "fruit juice concentrate" refers to a fruit juice product which, when diluted with the appropriate amount of water, forms drinkable fruit juice beverages. Fruit juice concentrates within the scope of the present invention are typically formulated to provide drinkable beverages when 35 diluted with 3 to 5 parts by weight water.

### Process of the present invention

The present invention is also directed to a process for the manufacture of an oral composition with the preferences as disclosed above, whereby the single ingredients, i.e. L-selenomethionine, L-seleno-cysteine and/or sodium selenite, as well as at least one compound from the group of retinol and its alkyl esters, alpha-tocopherol and its alkyl esters and coenzyme Q10 are added to processed fruit as defined above, preferably to processed mango fruit and/or processed mangosteen fruit, more preferably to a mixture of processed mango fruit and/or processed mangosteen fruit, in the respective amounts.

For preparing powders or effervescent tablets standard methods known to the person skilled in the art may be used.

The beverages of the present invention may e.g. be prepared by sterile filtration through a 0.45 µm membrane of all ingredients including the liquid (water, fruit juice, milk or vegan alternative) other than the processed fruit, especially the processed mango or mangosteen fruit, which is added thereafter.

### Non-therapeutic uses according to the present invention

The present invention is also directed to a non-therapeutic use of the oral composition according to the present invention for improving the condition and appearance of skin, preferably for reversing, reducing or slowing down one or more signs of skin photo damage and/or photo aging, wrinkle formation or normal aging of the skin, of a human to which said oral composition is orally administered to.

Hereby a sign of skin photo damage photo aging or normal aging is selected from the appearance of wrinkles, the appearance of spots, UV spots and brown spots the appearance of increased skin pore size and the appearance of skin roughness and reduced skin elasticity.

The non-therapeutic use according to the present invention affects especially the facial skin and/or the décolleté of a human, preferably of a human of the age of 40 to 75 years, more preferably of a human of the age of 45 to 65 years. More preferably the facial skin of a human, preferably of a human of the age of 40 to 75 years, more preferably of a human of the age of 45 to 65, is affected.

To achieve the best skin-protecting effect, the oral composition is preferably administered as beverage in an amount of 250 ml per day, preferably administered in two doses of 125 ml each.

### Non-therapeutic methods according to the present invention

The present invention is furthermore directed to a method for improving the condition and appearance of skin, preferably to a method for reversing, reducing or slowing down one or more signs of skin photo damage, photo aging or normal aging of the skin, of a human. Hereby an effective amount of an oral composition according to the present invention is orally administered to said human.

A sign of skin photo damage and photo aging or normal aging is preferably selected from the appearance of wrinkles, the appearance of spots, the appearance of increased skin pore size and the appearance of skin roughness and reduced skin elasticity.

The term « spot » according to the present invention encompasses spots caused by UV radiation, as well as brown spots.

The skin of the human is preferably the facial skin, preferably of a human of the age of 40 to 75 years, more preferably of a human of the age of 45 to 65 years.

To achieve the best skin-protecting effect, the oral composition is preferably administered as beverage in an amount of 250 ml per day, preferably administered in two doses of 125 ml each.

The present invention is now illustrated in the following non-limiting examples.

### Examples

Retinyl palmitate, ubiquinone, alpha-tocopherol, L-seleno- methionine, sodium selenite are purchased from Sigma Aldrich, Merck, and Vitaminaze Shop Germany, respectively. Fruit extracts from Papaya and Pineapple Plantations in Brazil are used for the manufacture of the drinks according to example 2 and 3.

The drink of example 1 is provided by tropextract gmbh in Frankfurt (DE). Its Brix value at 20°C is in the range of 1.9° to 2.9°, its pH is in the range of 3.3 to 3.5, and its acidity as citric acid at pH 8.1 is in the range of 2.0 to 2.6 g/L.

The mango juice concentrate used for producing the drink according to example 1 is a clear liquid, which is produced by depectinized, filtered, unfermented fruit juice from healthy, clean raw product by physically separating a specific part of the natural water content. The natural fruit juice flavour, which is accrued by the concentration process, is readded. The mango juice concentrate is made from fruits of *Mangifera Indica* in Mexico, Colombia and India. Its Brix value at 20°C is in the range of 63.0° to 67.0°, its pH is in the range of 3.1 to 3.6, its acidity as tartaric acid at pH 7.0 is in the range of 21.0 to 38.0 g/kg, its acidity as citric acid at pH 8.1 is in the range of 17.0 to 34.0 g/kg, its relative density (20°/20°) is in the range of 1.310 to 1.340.

The mangosteen puree used for producing the drink according to example 1 is produced in Vietnam of fruits from Indonesia, whereby its Brix value at 20°C is ≥ 15°, its total acidity is in the range of 0.5 to 0.7%, its pH value is in the range of 3.0 to 4.0; the content of pulp is ≥ 80% and the amino nitrogen is in the range of 18.0 to 25.0%. It is produced by defrosting the raw material (frozen mangosteen fruits) and blanching it at 80 to 85°C, followed by cooling to 25°C, transferal to a buffer tank and filtration with a 40 mesh filter. After sterilization at 95 to 100°C and cooling to < 30°C, it is filled in tied bags and stored in frozen state. The fat content is 0.2 g/100 g, the content of carbohydrates 16.0 g/100 g, the content of proteins 0.5 g / 100 g and the salt content (sodium x 2.5) is 3.2 g / 100 g, whereby all values are calculated.

### Manufacture of the used product

All ingredients as described below are mixed at room temperature for 30 minutes into deionised water in a 5000 liter container and filled into labelled 250 ml aluminum cans.

Manufacture of the drink of example 1 ("mango"):

| | **Ingredients** | **Amount in kg per 1000 kg** |
|---|---|---|
| **Processed mango and mangosteen** | sucralose | 0.02 |
| | citric acid anhydrous | 0.992 |
| | L(+) ascorbic acid | 2.382 |
| | mango juice concentrate 65° Brix, clear | 11.900 |
| | Mangosteen puree | 26.320 |
| **Vitamin mixture** | coenzyme Q10 10% on dextrin, maltodextrin, sodium selenate 0.4% on maltodextrin | 8.952 |
| Additional ingredients | mango flavour | 0.15 |
| | mango papaya flavour | 1.588 |
| | Testegem Powder Flavour | 0.430 |
| | Quinine Sulfate | 0.100 |
| **Water** | water | Ad 1000 |

For the manufacture of the drinks of example 2 («papaya ») and 3 (« pineapple »), respectively, fruit extracts from papaya or pineapple are used instead of the mixture of mango juice concentrate and mangosteen puree.

For the manufacture of the drinks according to example 4-9, the ingredients as listed below are added to the drink of example 1 in the amounts as given below:

| | | |
|---|---|---|
| Further ingredients of the oral composition of the present invention | vitamin A (Retinol) | 8 g/1000 liter |
| | alpha-tocopherol | 80 g/1000 liter |
| | L-selenomethionine | 1.6 g/1000 liter |
| | Coenzyme Q10 | 80 g/1000 liter |

### Administration scheme:

First 250 ml of physiological salt solution (control beverage - examples 10-18) is consumed daily over 3 months in the morning, at noon or in the evening 30 to 60 minutes before the meals. Then 250 ml of the beverage as manufactured above (examples 1-9) is consumed daily over 3 months in the morning, at noon or in the evening 30 to 60 minutes before the meals.

### Anti-aging measurements:

Visia-teint-analysis: Cosmetic Studio at ELLY SWISS Deutschland, Institut für Altersforschung Seeschloss, Seestrasse 2, D-17424 Seebad Heringsdorf, MV

After 3 months and after 6 months the wrinkle reduction is measured according to Visia Laser Manual.

### Non-therapeutic use of the oral composition according to the present invention / Method according to the present invention

The base of the beverage used in the experiments contained a physiological salt solution, processed fruit from tropical fruits and certain ingredients as specified below influencing the reduction of the telomer degradation on the chromosomes in the cellular nucleus.

Signs of aging were measured after oral administration of 250 ml beverage per day with physiological salt solution (control) or with (product): processed mango fruit and one or more ingredients from the group of retinyl palmitate, ubiquinone, alpha-tocopherol and L-selenomethionine or sodium selenite at daily recommended dose as shown in Table 1.

The anti-aging effect is measured on facial skin (regeneration and skin beauty comes from inside) of 40 (control and product): 20 females and 20 males each between 40 and 75 years. The users swallowed daily for 90 days the control beverage (examples 10-18) and then daily for 90 days the various product formulations (examples 1-9). The major anti-aging parameter on skin, wrinkle reductions as a result of regeneration of skin fibroblasts, were measured in the cosmetic studio of ELLY SWISS Germany, Seeschloss, 17424-Seebad Heringsdorf by Visia Laser scanning equipment at the beginning of the treatment and after 3 months and 6 months (control and various product formulations), respectively. No side effects (irritation allergies, etc.) were observed in all patients in our face studies.

We defined a score consisting of the investigated wrinkle reduction to demonstrate the overall anti-aging effect on facial skin after systemic application of specific ingredients as listed below and processed fruits. After three months, the oral composition of the present invention shows strong anti-aging activities. The numbers of wrinkles are reduced in this study providing the tool for an assumed high class anti-aging process internally, manifesting topically on skin anti-aging. More wrinkle reduction is measured with the products containing further ingredients in addition to processed mango fruit. The standard deviations are between 15 and 25% percent between the tested individuals (Table).

A facial analysis of subjects is performed after systemic application for 3 months with the control (physiological salt solution "PS", i.e., whereby neither any of the ingredients according to claim 1 nor processed fruit(s) are added) and after systemic application for 3 months of the product ("PS + ...", beverage with added ingredients according to claim 1 and processed fruit(s)). Table 1 shows the average reduction of skin irregularities in percent.

In contrast to processed papaya and processed pineapple, processed mango has a moderate antiwrinkle effect. This effect is increased by combination of the processed mango with one of the following ingredients : retinyl palmitate, ubiquinone, alpha-tocopherol and L-selenomethionine or sodium selenite. A synergistic effect is achieved with a mixture of processed mango and all these ingredients, whereby inorganic selenium (sodium selenite) is less effective than organic selenium (L-selenomethionine).

**Table 1**

| **Example** | **Used product** | **Average reduction of skin irregularities [%]** | **CONTROL: Physiological Salt (PS) only [%]** (examples 10-18) |
|---|---|---|---|
| 1 | PS + mango | 6 | 1 |
| 2 | PS + papaya | 3 | 2 |
| 3 | PS + pineapple | 2 | 0 |
| 4 | PS + mango + retinyl palmitate | 15 | 1 |
| 5 | PS + mango + ubiquinone | 12 | 0 |
| 6 | PS + mango + α-tocopherol | 10 | 2 |
| 7 | PS + mango + L-selenomethionine | 14 | 1 |
| 8 | PS + mango + retinyl palmitate + ubiquinone + α-tocopherol + L-seleno- methionine | 27 | 1 |
| 9 | PS + mango + retinyl palmitate + ubiquinone + α-tocopherol + sodium selenite | 19 | 2 |

## Claims

1. An oral composition comprising processed fruit, whereby the fruit is chosen from mango, mangosteen, button mangosteen and charichuelo, and at least one ingredient from the group of a selenium source, retinol and its alkyl esters, alpha-tocopherol and its alkyl esters, and coenzyme Q10, whereby the selenium source is at least one ingredient from the group of L-selenomethionine, L-selenocysteine and sodium selenite.

2. The oral composition according to claim 1, whereby the daily amount of said processed fruit is ranging from 5 to 40 g, and/or the daily amount of retinol and its alkylesters, especially of retinyl palmitate, is ranging from 1.7 to 7.6 µmol, most preferably it is ranging from 2.8 to 2.9 µmol, and/or the daily amount of alpha-tocopherol and its alkyl esters is ranging from 23 to 163 µmol, most preferably it is 70 µmol, and/or the daily amount of coenzyme Q10 is ranging from 10 to 100 mg, most preferably it is 30 mg, and/or the total daily amount of the selenium source is ranging from 35 to 125 µg, most preferably it is ranging from 50 to 55 µg.

3. The oral composition according to claim 1 and/or 2, whereby the composition comprises L-selenomethionine and/or sodium selenite, processed mango fruit and/or processed mangosteen fruit, retinol and/or one or more of its alkyl esters, alpha-tocopherol and/or one or more of its alkyl esters, and coenzyme Q10.

4. The oral composition according to any one or more of the preceding claims, further comprising at least one coenzyme from the group of panthenol, biotin, riboflavin, nicotinamide adenine dinucleotide (NAD), cobalamin, niacin and folic acid.

5. The oral composition according to any one or more of the preceding claims, further comprising at least one amino acid from the group of histidine, leucine, isoleucine, valine, lysine, methionine, phenylalanine, threonine and cysteine.

6. The oral composition according to any one or more of the preceding claims, whereby the oral composition is a beverage, preferably a non-alcoholic beverage, a powder or an effervescent tablet.

7. Process for the manufacture of an oral composition according to any one or more of the preceding claims being a beverage, whereby the single ingredients are added to water in the respective amounts.

8. Non-therapeutic use of the oral composition according to any one or more of the claims 1 to 6 for maintaining and/or improving the condition and appearance of skin, preferably for reversing, reducing or slowing down one or more signs of skin photo damage, photo aging or normal aging of the skin, of a human to which said oral composition is orally administered to.

9. The non-therapeutic use of claim 8, whereby a sign of skin photo damage and photo aging is selected from the appearance of wrinkles, the appearance of spots, the appearance of increased skin pore size and the appearance of skin roughness and increase of skin elasticity.

10. The non-therapeutic use according to any one or more of the claims 8 or 9, whereby the skin of the human is the facial skin and/or the skin of the décolleté, preferably of a human of the age of 40 to 75 years.

11. The non-therapeutic use according to any one or more of the claims 8 to 10, whereby the oral composition is administered as beverage in an amount of 250 ml per day, preferably administered in two doses of 125 ml each.

12. A method for maintaining and/or improving the condition and appearance of skin, preferably a method for reversing, reducing or slowing down one or more signs of skin photo damage, photo aging or normal aging of the skin, of a human, whereby an effective amount of an oral composition according to any one or more of claims 1 to 6 is orally administered to said human.

13. The method according to claim 12, whereby a sign of skin photo damage, photo aging or normal aging is selected from the appearance of wrinkles, the appearance of spots, the appearance of increased skin pore size the appearance of skin roughness and the appearance of skin elasticity.

14. The method according to any one the claims 12 or 13, whereby the skin of the human is the facial skin and/or the décolleté, preferably of a human of the age of 40 to 75 years.

15. The method according to any one of the claims 12 to 14, whereby the effective amount of said oral composition is 250 ml of a beverage per day the oral composition is added to, preferably administered in two doses of 125 ml each.
